# EUROPÄISCHE PATENTANMELDUNG

(11) **EP 3 945 614 A1**
(43) Veröffentlichungstag der Anmeldung: **02.02.2022**
(21) Anmeldenummer: 21182359.6
(22) Anmeldetag: 29.06.2021
(51) Int. Cl.: H01M 8/0206, H01M 8/0247, H01M 8/243, H01M 8/2465, H01M 8/124

(54) **INTERKONNEKTORENBLECH FÜR EINE BRENNSTOFFZELLE UND BRENNSTOFFZELLENSYSTEM FÜR EIN LUFTFAHRZEUG**

(30) Priorität: 29.07.2020 DE 102020120035
(71) Anmelder: Airbus Defence and Space GmbH, 82024 Taufkirchen (DE)
(72) Erfinder: FRIEDL, Stephan, 82024 Taufkirchen (DE); ZIMMERMANN, Kristian, 82024 Taufkirchen (DE)

(57) **Zusammenfassung**

Zur besseren Entnahme der mit der Brennstoffzelle (66) erzeugten Energie, wird ein Interkonnektorenblech (68) vorgeschlagen, das mittels Halteösen (80) an Befestigungsnoppen (82) der Brennstoffzelle (66) formschlüssig befestigt werden kann. Zusätzlich kann das Interkonnektorenblech (68) mittels Glaslot festgelegt werden. Zur Bereitstellung einer höheren Leistungdichte wird eine Brennstoffzelle (66) vorgeschlagen. Die Brennstoffzelle (66) kann durch 3D-Druck in Keramik hergestellt werden und weist aufgrund ihrer Spiralform eine verbesserte Leistungsdichte auf.

## Beschreibung

Die Erfindung betrifft ein Interkonnektorenblech für eine Brennstoffzelle. Ferner betrifft die Erfindung ein Brennstoffzellensystem für ein Luftfahrzeug und ein Luftfahrzeug.

Nicht nur im Individualverkehr sondern auch in der Luftfahrt werden alternative Antriebskonzepte und Energiequellen zusehends wichtiger. Ein Konzept sind elektrische Antriebe bzw. allgemein die Erzeugung elektrischer Energie in einem Luftfahrzeug. Aus Sicht der Luftfahrt kommt es auf eine hohe Leistungsdichte, einfache Wartbarkeit und hohe Skalierbarkeit an. Ein Kandidat zur Bereitstellung der erforderlichen Energien sind Brennstoffzellen, insbesondere Festoxidbrennstoffzellen.

Es ist die Aufgabe der Erfindung, Brennstoffzellen für den Einsatz in der Luftfahrt zu verbessern.

Die Aufgabe wird durch den Gegenstand der unabhängigen Ansprüche gelöst. Bevorzugt Weiterbildungen sind Gegenstand der abhängigen Ansprüche.

Die Erfindung schafft eine Brennstoffzelle, vorzugsweise Festoxidbrennstoffzelle, für ein Brennstoffzellensystem, vorzugsweise eines Luftfahrzeugs, wobei die Brennstoffzelle eine Mehrzahl von entlang einer Konstruktionsachse angeordneten Brennstoffzellenbereiche aufweist, wobei jeder Brennstoffzellenbereich einen Gaskanal aufweist, der in Umfangsrichtung um die Konstruktionsachse verlaufend ausgebildet ist.

Es ist bevorzugt, dass ein erster Brennstoffzellenbereich mit einem ersten Gaskanal für Brennstoff und ein zweiter Brennstoffzellenbereich mit einem zweiten Gaskanal für Oxidator angeordnet sind.

Es ist bevorzugt, dass die Brennstoffzellenbereiche integral als einzelnes einstückiges Element ausgebildet sind.

Es ist bevorzugt, dass die Brennstoffzellenbereiche in Draufsicht eine im Wesentlichen hexagonale Form aufweisen.

Es ist bevorzugt, dass eine Mehrzahl erster und zweiter Brennstoffzellenbereiche entlang der Konstruktionsachse im Wechsel derart angeordnet sind, dass die ersten Gaskanäle und zweiten Gaskanäle fluidverbunden sind.

Es ist bevorzugt, dass jeder Gaskanal wenigstens einen Gaseinlassbereich und wenigstens einen Gasauslassbereich aufweist, die jeweils derart angeordnet sind, dass beim Anordnen/Ausbilden eines entlang der Konstruktionsachse versetzten weiteren Brennstoffzellenbereichs der Gasauslassbereich mit dem Gaseinlassbereich des weiteren Brennstoffzellenbereichs fluchtet und/oder fluidverbunden ist.

Es ist bevorzugt, dass der Gaseinlassbereich und/oder der Gasauslassbereich an gegenüberliegenden Enden des Gaskanals angeordnet sind.

Es ist bevorzugt, dass auf einem der Gaskanäle oder zwischen den Gaskanälen eine ionenleitfähige Trennschicht angeordnet ist, um die Gaskanäle miteinander ionenleitend zu verbinden.

Es ist bevorzugt, dass die Brennstoffzelle wenigstens ein Verteilrohr umfasst, das zum Zuführen von Brennstoff und/oder Oxidator in den jeweiligen Gaskanal oder zum Abführen von Reaktionsprodukt oder unverbrauchtem Gas aus dem jeweiligen Gaskanal ausgebildet ist, wobei das Verteilrohr entlang der Konstruktionsachse betrachtet zumindest teilweise von jedem Gaskanal umgeben ist.

Es ist bevorzugt, dass die Brennstoffzelle Mehrzahl von Teilabschnitten umfasst, wobei die Gaskanäle in den jeweiligen Teilabschnitten parallel mit Brennstoff und Oxidator versorgbar sind.

Es ist bevorzugt, dass die Gaskanäle in deren Erstreckungsrichtung betrachtet mit einer zu der Konstruktionsachse orthogonalen Ebene einen Winkel, vorzugsweise einen Winkel zwischen 30° und 60°, einschließen.

Es ist bevorzugt, dass die Gaskanäle eine Doppelschraube bilden.

Es ist bevorzugt, dass jeder Gaskanal einen Gaskanalkrümmungsbereich und einen daran anschließenden Gaskanalebenenbereich aufweist.

Es ist bevorzugt, dass der Gaskanalkrümmungsbereich um 120° oder 180° gekrümmt ist.

Es ist bevorzugt, dass ein Gaseinlassbereich und/oder ein Gasauslassbereich an dem Gaskanalebenenbereich, vorzugsweise in der Mitte des Gaskanalebenenbereichs angeordnet sind.

Es ist bevorzugt, dass jeder Gaskanal einen Gasversorgungsbereich aufweist, der an das jeweilige Verteilrohr angeschlossen ist.

Es ist bevorzugt, dass jedes Verteilrohr innerhalb eines von den Gaskanalkrümmungsbereichen und den Gaskanalebenenbereichen umgebenen Bereichs angeordnet ist.

Es ist bevorzugt, dass die Brennstoffzelle eine Mehrzahl von Interkonnektorenblechen aufweist, die zum Entnehmen der elektrischen Energie ausgebildet sind.

Es ist bevorzugt, dass jeder Gaskanal eine leifähige Elektrodenbeschichtung für die erzeugte elektrische Energie enthält.

Es ist bevorzugt, dass jedes Interkonnektorenblech wenigstens eine Kontaktzunge aufweist, die in den entsprechenden ersten Gaskanal oder zweiten Gaskanal hineinragt.

Es ist bevorzugt, dass der Gaskanal wenigstens einen Durchbruch für die Kontaktzunge umfasst.

Es ist bevorzugt, dass mehrere Kontaktzungen kammartig angeordnet sind.

Es ist bevorzugt, dass jedes Interkonnektorenblech lediglich eine einzige Kontaktzunge umfasst.

Es ist bevorzugt, dass jedes Interkonnektorenblech einen elektrischen Anschlussbereich aufweist, der an die Kontaktzunge anschließt.

Es ist bevorzugt, dass der Anschlussbereich so ausgebildet ist, dass er im eingebauten Zustand des Interkonnektorenblechs radial nach außen gewandt ist, sodass er und von einem leitfähigen Element erfasst werden kann.

Es ist bevorzugt, dass jedes Interkonnektorenblech einen Klemmbereich aufweist, der sich im Wesentlichen parallel zu und in einem Abstand von der Kontaktzunge erstreckt, um das Interkonnektorenblech an der Brennstoffzelle zu haltern.

Es ist bevorzugt, dass das Interkonnektorenblech in der Elektrodenbeschichtung eingebettet ist.

Es ist bevorzugt, dass das Interkonnektorenblech einen ähnlichen Ausdehnungskoeffizienten wie der Gaskanal aufweist, in den es hineinragt, um eine Delamination des Interkonnektorenblechs zu verhindern.

Es ist bevorzugt, dass das Interkonnektorenblech einen Anschlussbereich zum Abgreifen der elektrischen Energie umfasst, wobei der Anschlussbereich derart ausgebildet ist, dass entlang der Konstruktionsrichtung gestapelte Interkonnektorenbleche mittels einer Stange, vorzugsweise einer Gewindestange, verbindbar sind.

Es ist bevorzugt, dass das Interkonnektorenblech wenigstens eine Halteöse aufweist, mittels der das Interkonnektorenblech an der Brennstoffzelle formschlüssig halterbar ist, vorzugsweise durch Einhängen an einem Noppen.

Es ist bevorzugt, dass die Halteöse eine Kreisform oder D-Form aufweist.

Es ist bevorzugt, dass jeder Gaskanal einen rechteckartigen Querschnitt aufweist.

Es ist bevorzugt, dass jeder Brennstoffzellenbereich eine Halteeinrichtung zum Haltern eines Interkonnektorenblechs aufweist.

Es ist bevorzugt, dass die Halteeinrichtung wenigstens einen Befestigungsnoppen zum formschlüssigen Befestigen des Interkonnektorenblechs aufweist.

Es ist bevorzugt, dass Befestigungsnoppen an jedem Brennstoffzellenbereich angeordnet sind.

Es ist bevorzugt, dass der Befestigungsnoppen halbkugelförmig, viertelkugelförmig oder hakenartig ausgebildet ist.

Es ist bevorzugt, dass das Interkonnektorenblech einen bandartigen Bereich umfasst, der sich im befestigten Zustand an den Brennstoffzellenbereich anschmiegt.

Es ist bevorzugt, dass die Brennstoffzelle an ihrer Außenumfangsfläche eine Wickelstruktur für ein leitfähiges Element, beispielsweise einen Draht, aufweist.

Es ist bevorzugt, dass die Wickelstruktur spiralförmig ausgebildet ist. Die Wickelstruktur umfasst vorzugsweise eine Rille. Die Rille verläuft vorzugsweise so, dass Interkonnektorenbleche gleicher Polarität durch Wickeln eines leitfähigen Elements um die Wickelstruktur miteinander elektrisch verbindbar sind.

Die Erfindung schafft ein Brennstoffzellensystem für ein Luftfahrzeug, umfassend eine Mehrzahl von bevorzugten Brennstoffzellen, die mit einem Abstand zueinander in einer Ebene und/oder die entlang ihrer Konstruktionsachse gestapelt angeordnet sind.

Vorzugsweise umfasst das Brennstoffzellensystem einen Brennstofftank und/oder eine Heizeinrichtung, wobei die Brennstoffzellen an den Brennstofftank fluidleitend und an die Heizeinrichtung wärmeleitend angeschlossen sind.

Vorzugsweise umfasst das Brennstoffzellensystem eine elektrische Energiespeichereinrichtung, die zum Zwischenspeichern von mittels der Brennstoffzelle erzeugten elektrischen Energie ausgebildet ist, und/oder einen Oxidatortank, der fluidleitend an die Brennstoffzelle angeschlossen ist.

Die Erfindung schafft ferner ein Luftfahrzeug umfassend eine bevorzugt Brennstoffzelle und/oder ein bevorzugts Brennstoffzellensystem.

Die Erfindung schafft ein Interkonnektorenblech für eine Brennstoffzelle, wobei das Interkonnektorenblech wenigstens eine Kontaktzunge, die einen Gaskanal einführbar ist, einen Anschlussbereich, der zum Abgreifen der elektrischen Energie ausgebildet ist, und wenigstens eine Halteöse aufweist, mittels der das Interkonnektorenblech an der Brennstoffzelle durch Einhängen an einem Noppen formschlüssig halterbar ist und/oder wenigstens einen Klemmbereich aufweist, mittels dem das Interkonnektoren Blech an einem Durchbruch der Brennstoffzelle durch einstecken halterbar ist.

Es ist bevorzugt, dass das Interkonnektorenblech als Blechbiegeteil ausgebildet ist.

Es ist bevorzugt, dass mehrere Kontaktzungen kammartig angeordnet sind.

Es ist bevorzugt, dass das Interkonnektorenblech einen ähnlichen Ausdehnungskoeffizienten wie der Gaskanal aufweist, in den es einführbar ist, um eine Delamination des Interkonnektorenblechs zu verhindern.

Es ist bevorzugt, dass der Anschlussbereich derart ausgebildet ist, dass entlang einer Konstruktionsrichtung angeordnete Interkonnektorenbleche mittels einer Stange, vorzugsweise einer Gewindestange, verbindbar sind.

Es ist bevorzugt, dass die Halteöse eine Kreisform oder D-Form aufweist.

Es ist bevorzugt, dass das Interkonnektorenblech einen bandartigen Bereich umfasst, der sich im befestigten Zustand an einen Brennstoffzellenbereich anschmiegt.

Die Erfindung schafft einen Brennstoffzellenbereich zum Bilden einer Brennstoffzelle, wobei der Brennstoffzellenbereich zum Haltern eines Interkonnektorenblechs mittels wenigstens eines Befestigungsnoppens ausgebildet ist, durch den Interkonnektorenblechs formschlüssig erfassbar ist.

Es ist bevorzugt, dass der Befestigungsnoppen halbkugelförmig, viertelkugelförmig oder hakenartig ausgebildet ist.

Es ist bevorzugt, dass der Brennstoffzellenbereich eine Anlagefläche für einen bandartigen Bereich eines Interkonnektorenblechs aufweist, sodass der bandartige Bereich sich im befestigten Zustand des Interkonnektorenblechs anschmiegt.

Die Erfindung schafft eine Brennstoffzelle, vorzugsweise Festoxidbrennstoffzelle, für ein Brennstoffzellensystem, vorzugsweise eines Luftfahrzeugs, wobei die Brennstoffzelle einen zuvor beschriebenen Brennstoffzellenbereich und ein zuvor beschriebenes Interkonnektorenblech aufweist, wobei das Interkonnektorenblech mittels der Halteöse an dem Befestigungsnoppen gehaltert ist.

Die Erfindung schafft ein Verfahren zum Herstellen eines Interkonnektorenblechs für einen Brennstoffzellenbereich, mit den Schritten:
a) Bereitstellen eines flachen Metallblechs;
b) Ausschneiden eines flachen Interkonnektorenblechrohlings unter Ausbildung wenigstens einer Kontaktzunge, wenigstens eines Anschlussbereichs und wenigstens einer Halteöse; und
c) Biegen des Interkonnektorenblechrohlings in eine dreidimensionale Form die der Kontur des Brennstoffzellenbereichs derart entspricht, dass das Interkonnektorenblech sich im eingebauten Zustand an den Brennstoffzellenbereich anschmiegt.

Die Erfindung schafft ein Verfahren zum Herstellen einer Brennstoffzelle durch Herstellen eines Interkonnektorenblechs, Einfügen der Kontaktzunge des Interkonnektorenblechs in einen Gaskanal der Brennstoffzelle und Befestigen der Kontaktzunge an der Gaskanalwand.

Vorzugsweise umfasst das Verfahren ein anschließendes Beschichten der Gaskanalwand mit einer Elektrodenbeschichtung, sodass die Kontaktzunge in der Elektrodenbeschichtung eingebettet ist.

Mit einer spiralförmigen Gestaltung kann eine größere Membranfläche, ein geringerer Anteil passiver Strukturen und ein besser skalierbares Design geschaffen werden.

Die Spirale kann anstatt eines runden Querschnitts auch einen flachen Querschnitt aufweisen, ohne dass dabei die Funktion der Brennstoffzelle beeinträchtigt wird. Die Kanäle umfassen vorzugsweise auf der länglichen Seite ebene, nicht gekrümmte Teilabschnitte. Insbesondere die Wandstücke der Kanäle sind in diesen Bereichen Ebenen. Dies ermöglicht eine vereinfachte Integration von metallischen Interkonnektoren, besonders dann, wenn die Kontaktflächen keine Krümmungen aufweisen.

Ferner lassen sich Brennstoffzellenbereiche mit länglicher Grundform in vorteilhafter Weise zu größeren Systemen zusammensetzen. Dabei kann der Bauraum besonders effizient und nahezu vollständig ausgenutzt werden. Insgesamt lassen sich somit hohe volumetrische Leistungsdichten (Watt/Liter) erreichen.

Die umlaufenden Gaskanäle müssen nicht flach ausgeführt sein. Die Kanäle können stattdessen schräg angeordnet sein, ohne die Funktion zu beeinträchtigen. Gleichzeitigt kann die Membranfläche bei gleichem Grundelementquerschnitt vergrößert werden. Somit kann eine erhöhte Leistung (Watt) des Brennstoffzellenelements erreicht werden.

Ferner können die Brennstoffzellenbereiche mittels 3D-Druckverfahren für Keramiken hergestellt werden. Dabei gibt es technische Einschränkungen für Geometrien. Ohne sogenannten "Supportstruktur" kann in der Regel keine ebene, zur Grundfläche parallele Fläche gedruckt werden. Bis zu einem bestimmten Winkel ist es allerdings möglich Überhänge zu drucken (Treppenprinzip). Die schräge Anordnung der spiralförmigen Kanäle kann das Design einfacher gedruckt werden.

Jede Brennstoffzelle benötigt eine Zufuhr von Brenngasen und die Ableitung des Reaktionsprodukts. Bei Hochtemperatur-Brennstoffzellen kann der Luftkanal auch zusätzlich zur Kühlung der Zelle verwendet werden. Somit können zwei zuführende Kanäle und zwei abführende Kanäle pro Zelleneinheit verwendet werden. Diese werden als Manifolds oder Verteilrohre bezeichnet und dienen als Gasanschlüsse des Elements. Die Verteilrohre können in der Mitte des spiralförmigen Designs integriert werden. Vorteilhaft können die Anschlussstücke damit auch direkt im 3D-Druckprozess mitgedruckt werden. Es werden keine weiteren Bauteile benötigt.

Zudem kann durch Ausnutzung des inneren Bereichs der Spirale für die Gas Zu- und Abführung eine kompakte Bauweise erreicht werden. Folglich kann die Leistungsdichte - vor allem gegenüber Konstruktionen die Zusatzelemente benötigen - verbessert werden.

Durch die zentrale Gaszufuhr der gedruckten "Manifolds" ergibt sich die Möglichkeit die Gase in mehreren Ebenen zu- und abzuführen. Damit kann das Design über die Gasverarmung in den Kanälen hinaus skaliert werden. Denn normalerweise ist die Kanallänge begrenzt, da die Frischgase verbraucht werden, während sich das Reaktionsprodukt anreichert. Ab einer gewissen Kanallänge wird ein effektiver Betrieb der Zelle schwierig, da ein längerer Kanal nicht mehr wesentlich zur weiteren Umsetzung der Gase beitragen kann. Dies kann dadurch umgangen werden, dass es mehrere, parallel angeschlossene Spiralelemente an den zu- und abführenden Kanälen angeschlossen werden. Die Länge des Brennstoffzellenelements in Spiralbauweise ist damit theoretisch unbegrenzt, da jeder Teilabschnitt mit frischen Gasen versorgt werden kann. Auch die Gasabführung ist in gleicher Weise möglich. Es können somit größere Einzelzellen gefertigt werden, was insbesondere für Systeme mit großen Leistungen vorteilhaft ist.

Werden auch die Beschichtungen der Membranen in Teilabschnitte zerteilt und elektrisch einzeln aus der Spirale herausgeführt, kann sich für jeden Teilabschnitt ein eigenes elektrisches Zellspannungspotential ergeben. Dadurch ist eine Serienverschaltung wie bei üblichen Stacks möglich. Somit kann ein in 3D-Druckverfahren herstellbarer Stack erstellt werden, der in einem Stück gefertigt werden kann und zwischen den Membranabschnitten keine zusätzliche Dichtung benötigen. Somit kann das Gewicht der Einheit und der Anteil der aktiv zur Energieumsetzung beitragenden Struktur reduziert werden.

Ferner ist das Design vorteilhaft für die Anbringung von metallischen Interkonnektoren zur Entnahme der elektrischen Energie.

Die Elektrodenbeschichtungen die gewöhnlich die Anode und Kathode der Brennstoffzellenbereiche bilden haben meist eine begrenzte Leitfähigkeit. Besonders das Kathodenmaterial weist verglichen mit Metallen eine sehr geringe Leitfähigkeit auf. Die Ladungsträger die auf den Oberflächen abgespalten beziehungsweise an ihnen rekombiniert werden, müssen zum Schließen des Stromkreises zwischen den Elektroden transportiert werden. Die Last beziehungsweise der Energieverbraucher wird in diesen Stromkreis integriert. Da der Stromfluss in der Ebene der dünnen Elektrodenbeschichtung stattfindet und der effektive Leiterquerschnitt der Elektroden aufgrund der geringen Schichtdicken von meist 50 µm bis 400 µm vergleichsweise gering ist, können hier signifikante ohmsche Verluste anfallen. Zur Steigerung der Effizienz des Brennstoffzellenbetriebs sollten diese Verluste möglichst minimiert werden. Üblicherweise werden auf die Elektrodenbeschichtung metallische Gitter aufgebracht, beispielsweise Nickelgeflechte.

Festoxidbrennstoffzellen (engl. solid oxide fuel cells, SOFC) mit innenliegenden Membranstrukturen, die mittels 3D-Druck hergestellt werden, sind von außen nicht einfach zugänglich. Lediglich Elektrodenbeschichtungen können auf die internen Strukturen aufgebracht werden. Dies kann beispielsweise durch Pulverbeschichtung mit kleinen Partikeln erfolgen. Feste metallische Strukturen können bislang nicht mitgedruckt werden. Als Lösung wird eine metallische Interkonnektorstruktur vorgeschlagen, die mit dem keramischen Grundkörper zur Elektrodenkontaktierung kombinierbar ist.

Die typischen Betriebstemperaturen von Hochtemperatur-Brennstoffzellen betragen bis zu 1000 °C. Dies ist eine Herausforderung für die Materialien aber auch für die Aufbau- und Verbindungstechnik. Abdichtungen können mit Glasloten realisiert werden. Eine betriebsfeste Verbindung zwischen metallischen Interkonnektoren und filigranen, keramischen Strukturen ist zwar möglich, jedoch schwierig. So sind bei den typischen Temperaturen keine üblichen Klebstoffe verfügbar, Schrauben können bei porösen Materialen ebenfalls kompliziert sein und zusätzlich das Gewicht unerwünscht erhöhen. Kraftschlüssige Verbindungen durch Ausnutzung von Federkräften, etwa Schnapp- oder Klipsverbindungen, sind ebenfalls kaum zu realisieren, da die Federkonstanten bei den Betriebstemperaturen der SOFS zu gering sein können.

Eine Idee ist es daher, metallische Biegeteile mittels formschlüssiger Verbindung auf der Brennstoffzelle anzubringen und mit Glaslot abzudichten. Die Verwendung von auf den Ausdehnungskoeffizienten des keramischen Grundmaterials abgestimmten Metalllegierungen kann zusätzliche Zwangskräfte vermeiden. Beispielsweise kann das Material Crofer-22-APU, erhältlich von VDM als Plattenmaterial, verwendet werden.

Für eine formschlüssige Verbindung werden Strukturen am keramischen Körper vorgeschlagen, die ein Einhängen der metallischen Elemente ermöglichen. Heutige 3D-Druckverfahren weisen diesbezüglich aber Einschränkungen auf, so dass die Form entsprechend gewählt werden sollte. In allen Langen gut möglich sind beispielsweise sphärische Oberflächen. Daher werden vorzugsweise halbkugelförmige "Noppen" verwendet mit denen Metallstreifen positioniert werden können. Dieses Prinzip kann dahingehend erweitert werden, dass ein Einhaken des Blechs in Zugrichtung ermöglicht wird. Dazu kann die halbkugelförmige Struktur nochmals geteilt werden. Die Haltekraft kann weiter gesteigert werden durch ein Abschrägen. Insgesamt können die als Interkonnektoren gedachten Blechteile dann von selbst halten, so dass der Zusammenbau der Brennstoffzelle erleichtert werden kann.

Der maximal von der Zelle produzierte Stromfluss hängt unter anderem von der Membranfläche ab. Da die Leitfähigkeit in den Elektrodenschichten begrenzt ist, werden die metallischen Kontaktierungen vorzugsweise in einem gewissen Abstand widerholt. Dies kann durch eine kammförmige Grundstruktur sichergestellt werden, die in ihrem wiederholenden Muster grundsätzlich nicht begrenzt und damit die Abmessungen des Zieldesigns nicht limitiert.

Ferner kann durch die kammartige Struktur eine gewisse Ausgleichsbewegung ermöglicht werden. Dies kann helfen Materialspannungen abzubauen und eine Delamination zwischen metallischem Interkonnektor und Keramik mit Elektrodenbeschichtung zu vermeiden. Somit können auch kleine Unterschiede zwischen den Ausdehnungskoeffizienten der Materialien ausgeglichen werden.

Die elektrische Verbindung zwischen Interkonnektormetall und Elektrode kann dadurch hergestellt werden, dass zunächst die Bleche mit der Keramik zusammengesetzt werden und anschließend die Beschichtung der Elektrode erfolgt. Dabei werden die Kontaktzungen direkt mit in das Elektrodenmaterial eingebettet und damit auch mit dem Keramikgrundmaterial verbunden.

Die Interkonnektoren werden in großer Stückzahl benötigt und sollten so ausgelegt sein, dass ein Verfahren für eine Massenfertigung anwendbar ist. Die Bleche können durch diverse Fertigungsverfahren, wie zum Beispiel Mikro-Wasserstrahlschneiden, Stanzen oder Laserstrahlschneiden aus Blechen herausgetrennt werden. Eine zusätzliche Formgebung durch Biegevorrichtungen ist ebenfalls möglich. Die Anzahl und Länge der für die Funktion benötigten Kontaktzungen steht aufgrund des speziellen Designs nicht im Gegensatz zur Fertigbarkeit. Auch wird kein weiteres Verfahren benötigt, um die Blechteile aus mehreren Bauteilen zusammenzusetzen. Das Interkonnektorenblech kann am Stück gefertigt werden.

Die Blechinterkonnektoren sind für die hierin beschriebene Hochtemperatur-Brennstoffzelle besonders geeignet, lassen sich aber auch auf ähnliche andere Architekturen anwenden.

Die Steigung der Spirale im Blechzuschnitt kann derart berücksichtigt werden, dass sich ein horizontaler Anschluss ergibt, der leicht mit weiteren Anschlüssen verbunden werden kann. Denkbar ist etwa eine elektrisch leitende Gewindestange. Die Blechelemente können Stück für Stück am Keramikkörper angebracht werden und dadurch eine separate Kontaktierung des positiven und negativen Potentials ermöglichen. Die Kontaktzungen ragen vorzugsweise durch Ausbrüche in der Keramik direkt über die aktiven Membranflächen. Die Elektrodenmaterialien können nachträglich aufgebracht.

Die noch verbleibenden Öffnungen können wie bei Hochtemperatur-Brennstoffzellen üblich mit Glasloten verschlossen werden. Zusätzlich können vorgefertigte Glasfolien mit entsprechendem Lochmuster vor dem Anbringen der Blechteile auf der Keramik appliziert werden. Dies ermöglicht eine verbesserte Abdichtung und "verklebt" die Blechteile zusätzlich mit dem Elektrolyten. Im letzten Fertigungsschritt können die Glasanteile in einem Ofen aufgeschmolzen werden, um die gewünschte Abdichtung zwischen Metall und Keramik zu erzielen.

Ein weiteres Beipiel weist eine sechseckige Grundstruktur auf. Durch symmetrische Gestaltung kann eine vergleichsweise gleichmäßige Schrumpfung im Sinterprozess erreicht werden. Dadurch ist der Brennstoffzellenkorpus weniger rissanfällig und der Fertigungsprozess ist insgesamt stabiler. Auch lassen sich diese Elemente sehr kompakt räumlich anordnen, wodurch die erreichbare Leistungsdichte weiter verbessert werden kann.

Die Membranflächen haben somit weiterhin ebene Teilsegmente, die gut mit flachen Blechteilen kontaktiert werden können. Der Anteil gekrümmter Flächen geht im Vergleich zu anderen Ausführungen weiter zurück. Dadurch kann die nutzbare Membranfläche anteilig weiter vergrößert werden.

Die Gaszuführung kann in einem segmentierten Kamin erfolgen. Dieser kann die Gasführung in aneinandergereihten Elementen auf einfache Weise verbessern.

Die Mantelfläche der Brennstoffzelle weist vorzugsweise eine umlaufende Rille auf, in die ein Draht eingelegt werden kann. Die Rille ist, ähnlich wie ein Gewinde, fortlaufend in die Mantelfläche eingearbeitet. Entlang dieser Rille kann ein Draht zur Kontaktierung der Interkonnektorbleche um die Zelle gewickelt werden. Dieser Draht kann die Bleche fixieren und/oder kann als elektrischer Ableiter benutzt werden.

Als Interkonnektorbleche können wiederum einfache Blechbiegeteile fungieren, die durch Öffnungen in der Brennstoffzellenstruktur eingelegt werden. In einem weiteren Schritt kann der Draht angebracht werden. Der Draht kann mittels geeigneter Schweißverfahren (z.B. WIG oder Mikroplasmaschweißen) punktuell mit den Blechen verbunden werden. Die verbleibenden Öffnungen können mittels Glaslot abgedichtet werden.

Durch diese Vorgehensweise entsteht ein formschlüssiger Aufbau aus Brennstoffzelle und Interkonnektorblechen. Die temperaturstabile, stoffschlüssige Verbindung von Interkonnektoren und Ableiterdraht kann eine hohe Stabilität und einen guten Wirkungsgrad ermöglichen.

Nachfolgend werden Ausführungsbeispiele der Erfindung anhand der beigefügten schematischen Zeichnungen näher erläutert. Darin zeigt:
- Fig. 1: eine Beispiel einer spiralförmigen Brennstoffzelle;
- Fig. 2: ein Beispiel eines flachen Brennstoffzellenbereichs;
- Fig. 3: eine Mehrzahl von Brennstoffzellenbereichen;
- Fig. 4: ein Beispiel einer Brennstoffzelle aus den Brennstoffzellenbereichen aus Fig. 2;
- Fig. 5: ein Schnitt durch die Brennstoffzelle aus Fig. 4;
- Fig. 6: ein weiteres Beispiel einer Brennstoffzelle;
- Fig. 7: eine schematische Ansicht der Gasversorgung der Brennstoffzelle aus Fig. 6;
- Fig. 8 bis Fig. 12: ein Ausführungsbeispiel einer Brennstoffzelle mit Interkonnektorenblechen;
- Fig. 13: ein Beispiel für ein Interkonnektorenblech;
- Fig. 14: das Interkonnektorenblech aus Fig. 13 im eingebauten Zustand;
- Fig. 15 bis Fig. 17: Ausführungsbeispiele einer Befestigung des Interkonnektorenblechs;
- Fig. 18 und Fig. 19: ein Beispiel zur Herstellung des Interkonnektorenblechs aus Fig. 13;
- Fig. 20 und Fig. 21: jeweils ein Ausführungsbeispiel eines Brennstoffzellensystems;
- Fig. 22: ein Ausführungsbeispiels einer Brennstoffzelle;
- Fig. 23: eine schematische Darstellung des Zu- und Abflusses von Gas bei der Brennstoffzelle aus Fig. 22;
- Fig. 24: eine Detailansicht einer Verdrahtung der Brennstoffzelle aus Fig. 22;

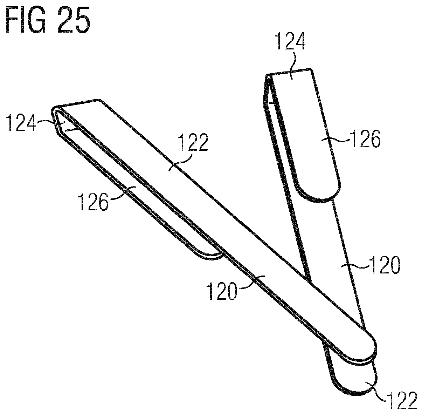

- Fig. 25: ein Ausführungsbeispiel eines Interkonnektorenblechs; und
- Fig. 26: ein Beispiel eines Verdrahtungsvorgangs der Brennstoffzelle.

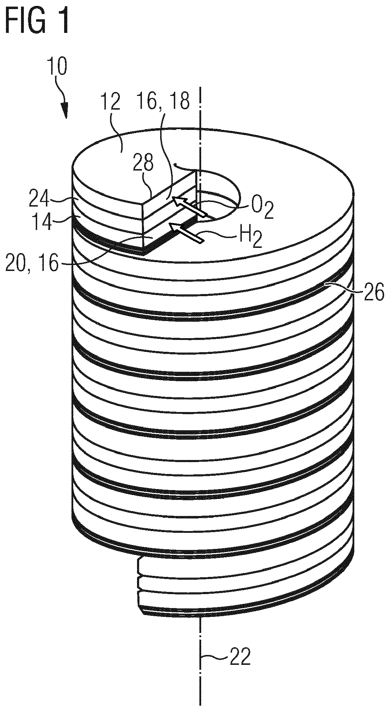

Es wird zunächst auf Fig. 1 Bezug genommen, die ein Beispiel einer Brennstoffzelle 10 zeigt. Die Brennstoffzelle 10 weist einen ersten Brennstoffzellenbereich 12 und einen zweiten Brennstoffzellenbereich 14 auf. Jeder Brennstoffzellenbereich 12, 14 enthält einen Gaskanal 16.

Der erste Brennstoffzellenbereich 12 umfasst einen ersten Gaskanal 18, beispielsweise für Oxidator und der zweite Brennstoffzellenbereich 14 umfasst einen zweiten Gaskanal 20, beispielsweise für Brennstoff.

Der erste Gaskanal 18 und der zweite Gaskanal 20 erstrecken sich spiralförmig in einer Umfangsrichtung um eine Konstruktionsachse 22. Die Konstruktionsachse 22 verläuft hier im Zentrum der Spirale.

Der erste Gaskanal 18 und der zweite Gaskanal 20 sind durch eine ionenleitfähige Trennschicht 24 entlang ihrer Erstrecktungsrichtung miteinander verbunden. Ferner ist eine Isolationsschicht 26 angeordnet, um einen Zellenschluss zu verhindern.

Jeder Gaskanal 16 kann eine Elektrodenbeschichtung 28 enthalten, um die erzeugte elektrische Energie der Brennstoffzelle 10 zu entnehmen.

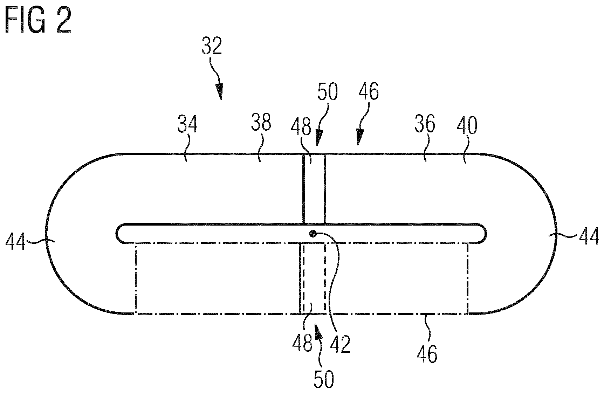

Es wird auf Fig. 2 bis Fig. 4 Bezug genommen, die ein Beispiel für eine Brennstoffzelle 30 zeigen. Die Brennstoffzelle 30 umfasst eine Mehrzahl von Brennstoffzellenbereichen 32. Dabei können ein erster Brennstoffzellenbereich 34 und ein zweiter Brennstoffzellenbereich 36 als ein Stück ausgebildet sein.

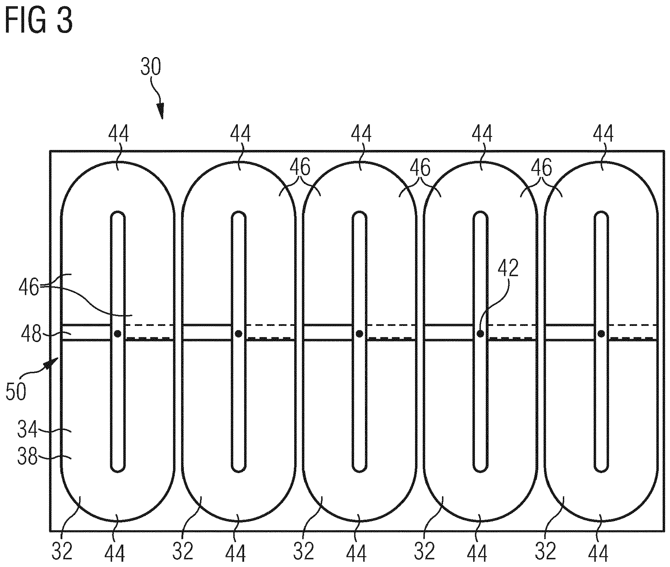

Jeder Brennstoffzellenbereich 32 umfasst jeweils einen ersten Gaskanal 38 und einen zweiten Gaskanal 40. Der Brennstoffzellenbereich 32 ist so ausgebildet, dass die Gaskanäle 38, 40 in Umfangsrichtung um eine Konstruktionsachse 42 verlaufen. Die Konstruktionsachse 42 ist in Fig. 2 und 3 senkrecht zur Zeichenebene.

Jeder der Gaskanäle 38, 40 weist einen Gaskanalkrümmungsbereich 44 und einen daran anschließenden Gaskanalebenenbereich 46 auf. Der Gaskanalkrümmungsbereich 44 ist vorzugsweise um 180° gekrümmt. Der Gaskanalebenenbereich 46 ist gerade und ohne Krümmung ausgebildet, so dass sich eine langgestreckte ovale Form des Brennstoffzellenbereichs 32 ergibt.

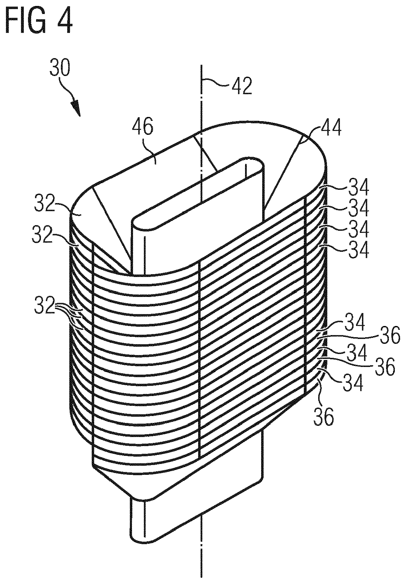

Der erste Gaskanal 38 und der zweite Gaskanal 40 weisen jeweils einen Gaseinlassbereich 48 auf. Der Gaseinlassbereich 48 ist in der Draufsicht der Fig. 2 und 3 erkennbar und in Fig. 4 nicht näher dargestellt. In Fig. 4 ist der Gaseinlassbereich 48 nach oben ausgerichtet. Der Gaseinlassbereich 48 ist beispielsweise in der Mitte des Gaskanalebenenbereichs 46 angeordnet. Der Gaseinlassbereich 48 ist vorzugsweise so angeordnet, dass z.B. beim Anordnen eines weiteren Brennstoffzellenbereichs 32 entlang der Konstruktionsachse 42 der Gaseinlassbereich 48 mit dem jeweiligen Gaskanal 38, 40 des weiteren Brennstoffzellenbereichs 32 fluidverbunden ist.

Der erste Gaskanal 38 und der zweite Gaskanal 40 weisen jeweils einen Gasauslassbereich 50 auf. Der Gasauslassbereich 50 befindet sich in der Draufsicht der

Fig. 2 und 3 unterhalb der Zeichenebene und ist daher nicht erkennbar. In Fig. 4 ist der Gasauslassbereich 50 nach unten ausgerichtet. Der Gasauslassbereich 50 ist beispielsweise in der Mitte des Gaskanalebenenbereichs 46 angeordnet. Der Gasauslassbereich 50 ist vorzugsweise so angeordnet, dass z.B. beim Anordnen eines weiteren Brennstoffzellenbereichs 32 entlang der Konstruktionsachse 42 der Gaseinlassbereich 48 mit dem Gasauslassbereich 50 des jeweiligen Gaskanals 38, 40 des weiteren Brennstoffzellenbereichs 32 fluidverbunden ist.

Jeder Gaskanal 38, 40 kann eine Elektrodenbeschichtung 52 enthalten, um die erzeugte elektrische Energie der Brennstoffzelle 30 zu entnehmen.

Insgesamt kann so ein durchgehender erster Gaskanal 38 und zweiter Gaskanal 40 gebildet werden. Somit ist die effektive Fläche deutlich vergrößert und die volumetrische Leistungsdichte kann erhöht werden.

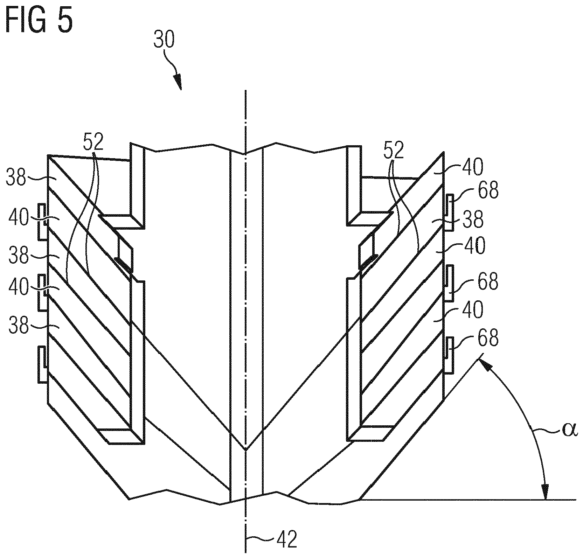

Wie in Fig. 5 dargestellt, können die Gaskanäle 38, 40 unter einem Winkel α relativ zu der Horizontalrichtung ausgebildet sein. Mit dieser Ausgestaltung kann die Herstellung mittels 3D-Druck vereinfacht werden, weil weniger oder keine Supportstrukturen benötigt werden.

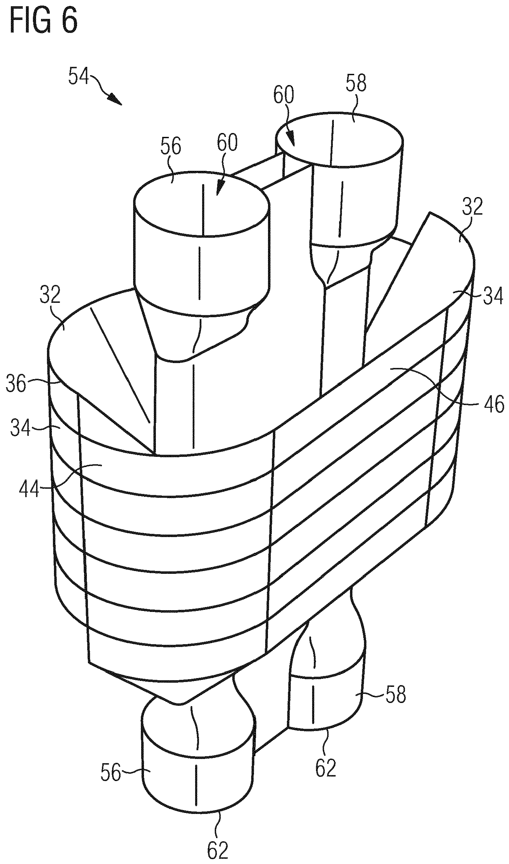

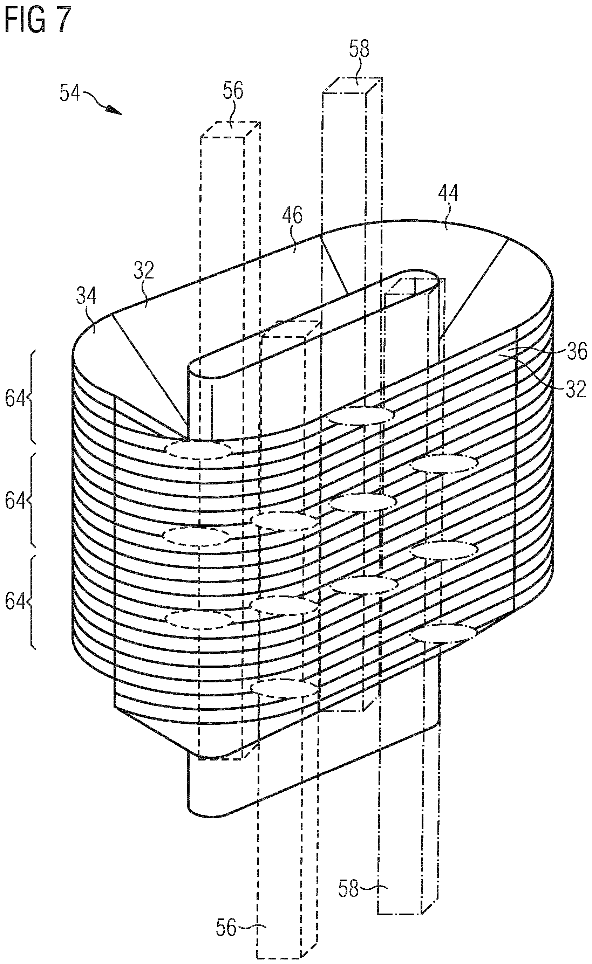

Es wird auf Fig. 6 und Fig. 7 Bezug genommen, die ein Beispiel einer Brennstoffzelle 54 in unterschiedlichen Varianten zeigen. Die Brennstoffzelle 54 umfasst eine Mehrzahl von Brennstoffzellenbereichen 32, ein erstes Verteilrohr 56 und ein zweites Verteilrohr 58. Das erste Verteilrohr 56 kann für den Brennstoff vorgesehen sein, während das zweite Verteilrohr 58 für den Oxidator vorgesehen sein kann.

Die Verteilrohre 56, 58 sind in einem Bereich angeordnet, der von den Gaskanälen 38, 40 umgeben beziehungsweise in Draufsicht betrachtet umschlossen ist. Die Verteilrohre 56, 58 verlaufen vorliegend parallel zu der Konstruktionsachse 42.

Jedes Verteilrohr 56, 58 weist einen Gasversorgungsbereich 60 auf, der an ein Gasreservoir anschließbar ausgebildet sein kann. Im Fall des Oxidators kann der Gasversorgungsbereich 60 der Luftzufuhr ohne Gasreservoir dienen.

Jedes Verteilrohr 56, 58 hat zudem einen Gasentsorgungsbereich 62 aus dem nicht verbrauchtes Restgas und Reaktionsprodukt austreten kann.

In der in Fig. 6 dargestellten Variante dient das erste Verteilrohr 56 zur Verteilung des Brennstoffs und das zweite Verteilrohr 58 zur Verteilung des Oxidators. In dieser Variante bildet das erste Verteilrohr 56 mit dem ersten Gaskanal 38 und das zweite Verteilrohr 58 mit dem zweiten Gaskanal 40 einen durchgehenden Fluidpfad.

In der in Fig. 7 dargestellten Variante ist die Brennstoffzelle 54 in beispielsweise drei Teilabschnitte 64 aufgeteilt. Jeder Teilabschnitt 64 wird unabhängig von den übrigen Teilabschnitten 64 durch die Verteilrohre 56, 58 mit Brennstoff und Oxidator versorgt.

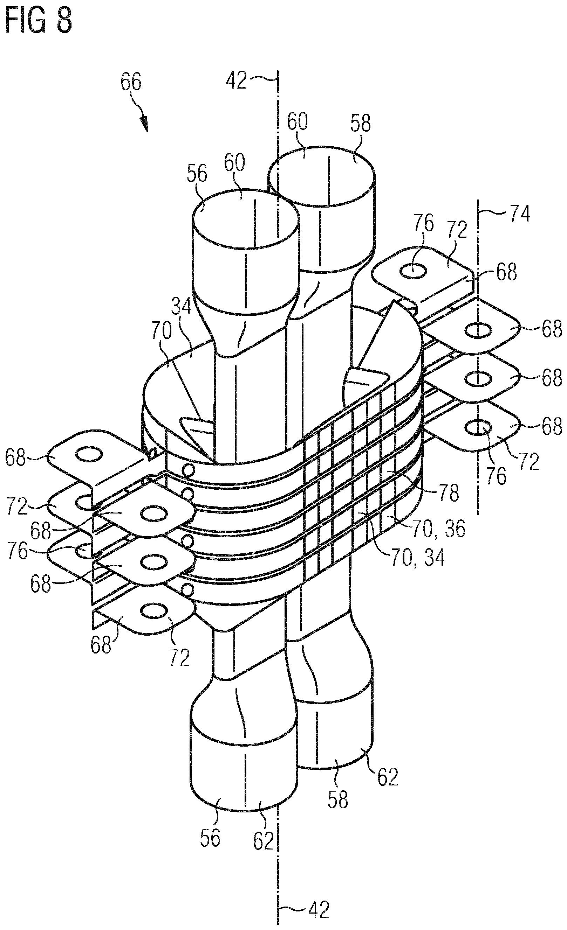

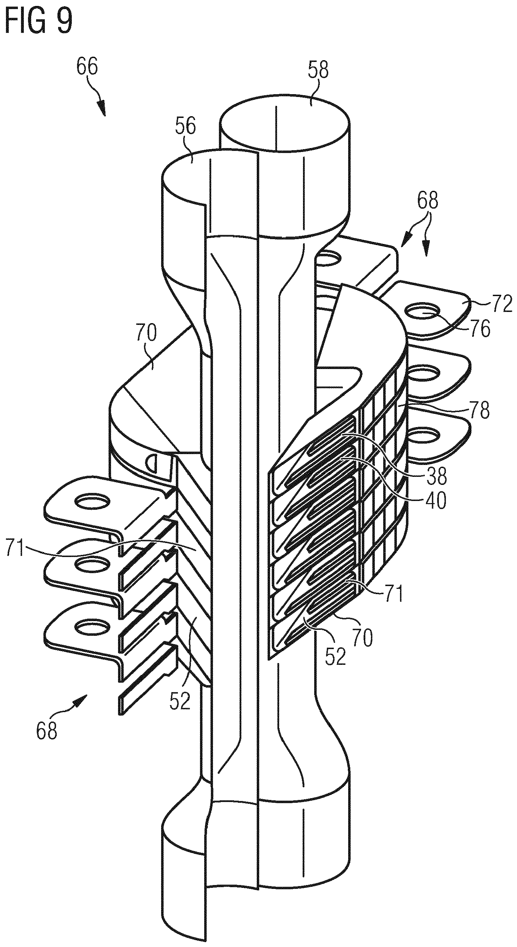

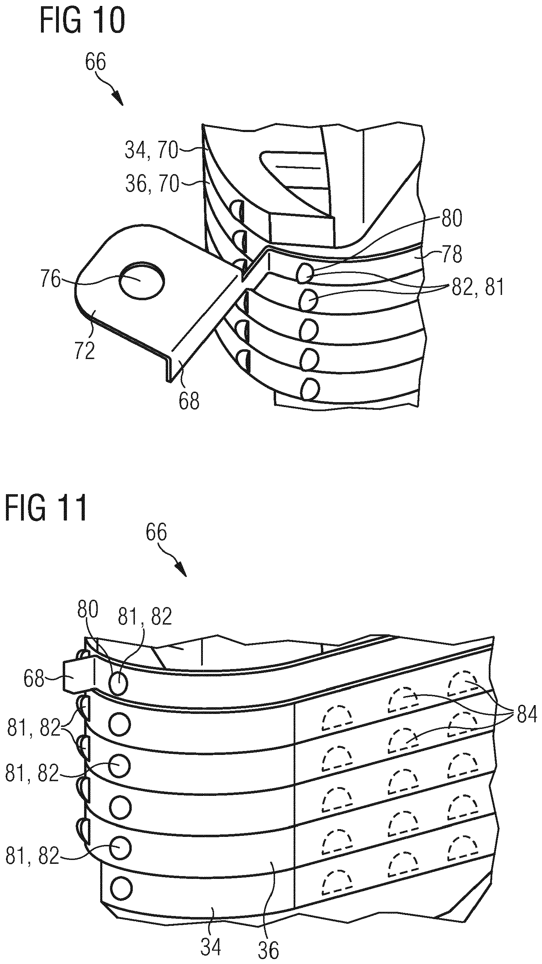

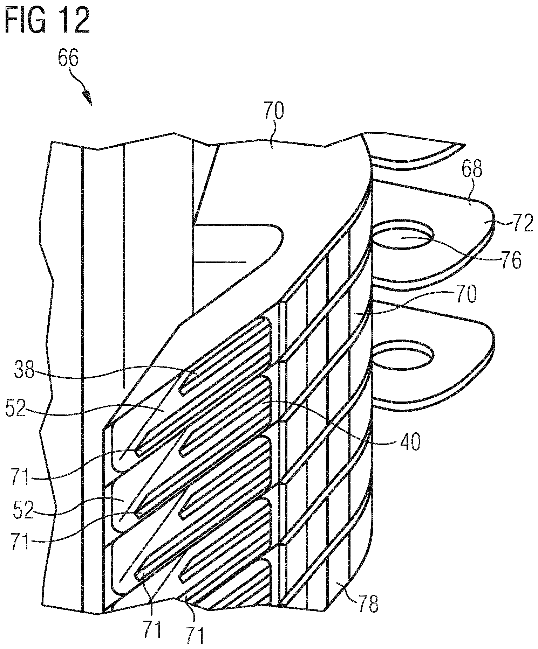

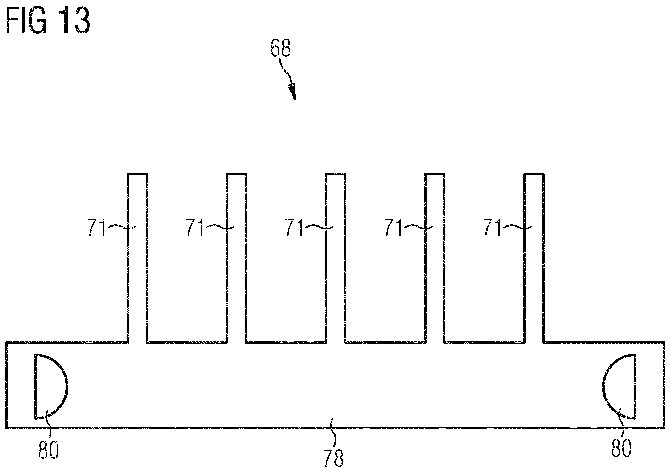

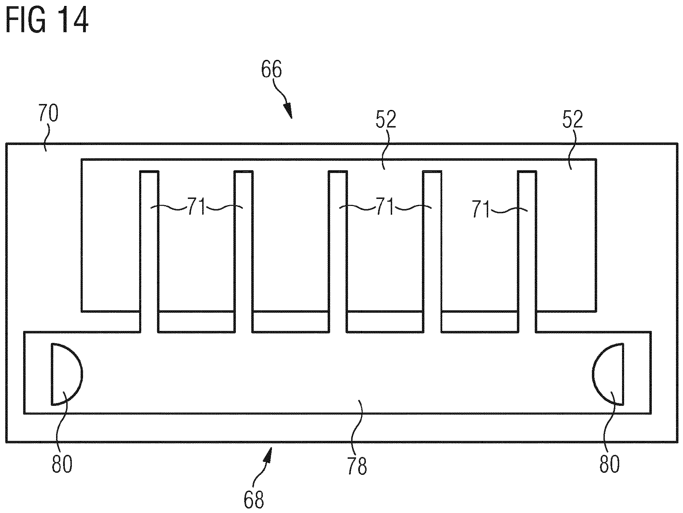

Es wird auf Fig. 8 bis Fig. 14 Bezug genommen, die ein Beispiel einer Brennstoffzelle 66 zeigt. Die Brennstoffzelle 66 ist ähnlich zu der Brennstoffzelle 54 ausgebildet und umfasst zusätzlich eine Mehrzahl von Interkonnektorenblechen 68. Jedes Interkonnektorenblech 68 ist an einem Brennstoffzellenbereich 70 der Brennstoffzelle 64 angeordnet. Mittels der Interkonnektorenbleche 68 kann die erzeugte elektrische Energie entnommen werden.

Das Interkonnektorenblech 68 umfasst eine Mehrzahl von Kontaktzungen 71. Jede Kontaktzunge 71 ragt entweder in den ersten Gaskanal 38 oder in den zweiten Gaskanal 40 hinein. Die Kontaktzungen 71 sind an der Wand des jeweiligen Gaskanals 38, 40 befestigt. Die Elektrodenbeschichtung 52 ist vorzugsweise so angeordnet, dass die Kontaktzungen 71 in der Elektrodenbeschichtung 52 eingebettet sind.

Jedes Interkonnektorenblech 68 umfasst ferner einen elektrischen Anschlussbereich 72. Die Anschlussbereiche 72 sind so ausgebildet, dass diese entlang einer Verbindungsachse 74 mittels einer Gewindestange elektrisch verbunden werden können. Jeder Anschlussbereich 72 kann eine Anschlussöffnung 76 für die Gewindestange aufweisen. Mit anderen Worten fluchten die Anschlussöffnungen 76 der Anschlussbereiche 72.

Jedes Interkonnektorenblech 68 weist einen bandartigen Bereich 78 auf. Der bandartige Bereich 78 ist an die Kontur des Brennstoffzellenbereichs 70 so angepasst, dass der bandartige Bereich 78 sich an den Brennstoffzellenbereich 32 anschmiegt. Der bandartige Bereich 78 ist vorzugsweise C-förmig ausgebildet. An gegenüberliegenden Enden des bandartigen Bereichs 78 ist jeweils eine Halteöse 80 angeordnet.

Der Brennstoffzellenbereich 70 umfasst eine zu den Halteösen 80 passende Halteeinrichtung 81, um das Interkonnektorenblech 68 zu haltern. Die Halteeinrichtung 81 weist Befestigungsnoppen 82 auf, um eine formschlüssige Verbindung mit den Halteösen 80 zu erzeugen.

Jeder Befestigungsnoppen 82 ist an einer Außenumfangsfläche des Brennstoffzellenbereichs 70 angeordnet. Der Befestigungsnoppen 72 ist vorzugsweise im Wesentlichen halbkugelförmig ausgebildet. Die Interkonnektorenbleche 68 können mittels Glaslot an dem Brennstoffzellenbereich 70 befestigt sein. Das Glaslot kann dabei etwaige verbleibende Öffnungen abdichten.

Der Brennstoffzellenbereich 70 umfasst ferner einen Durchbruch 84 für jede Kontaktzunge 71.

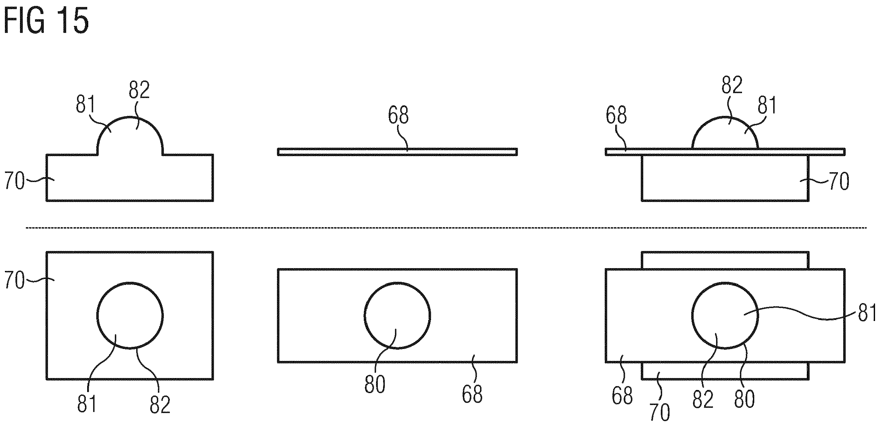

Wie in den Fig. 15 bis 17 dargestellt, können die Halteösen 80 und die Befestigungsnoppen 82 unterschiedliche Formen aufweisen. In Fig. 15, links, ist eine halbkugelförmige Befestigungsnoppe 82 dargestellt, zu der eine kreisförmige Halteöse 80 gehört (Fig. 15, Mitte). In Fig. 15, rechts ist die formschlüssige Verbindung dargestellt, die ein Abgleiten des Interkonnektorenblechs 68 von dem Brennstoffzellenbereich 70 verhindert.

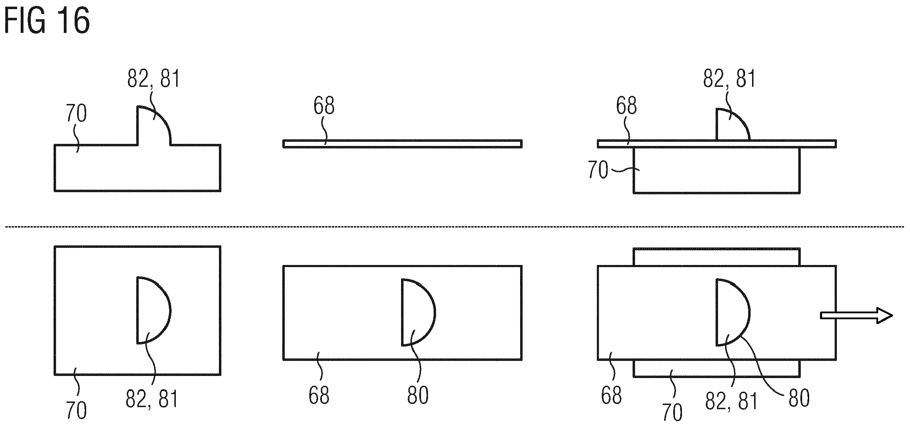

Eine weitere Variante ist in Fig. 16, links dargestellt, die eine viertelkugelförmige Befestigungsnoppe 82 zeigt. Dazu gehört eine D-förmige Halteöse 80 (Fig. 16, Mitte). Durch die steile Flanke der Befestigungsnoppe 82 kann ein Abgleiten noch besser verhindert werden (Fig. 16, rechts). Möglich ist auch das Interkonnektorenblech 68 ein wenig unter mechanischer Spannung zu halten und so ein noch besseres Anlegen an den Brennstoffzellenbereich 70 zu ermöglichen.

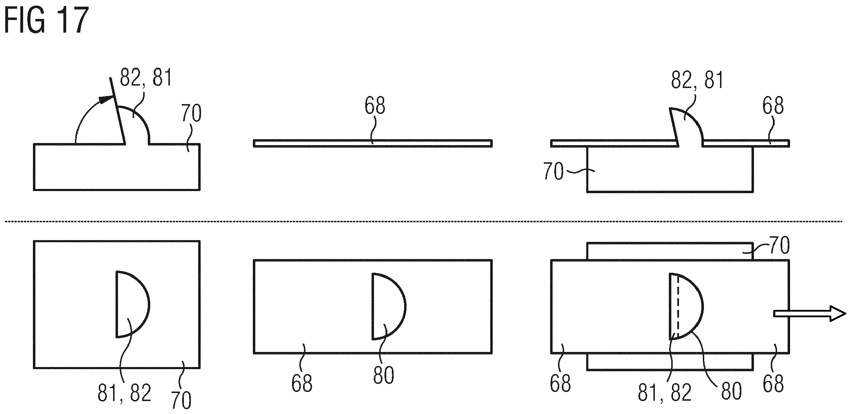

Mit der in Fig. 17 dargestellten Variante kann der Formschluss weiter verbessert werden. Ähnlich wie in Fig. 16 ist eine D-förmige Halteöse 80 erforderlich. Allerdings weist der Befestigungsnoppen 82 einen spitzen Winkel zu der Horizontalen auf.

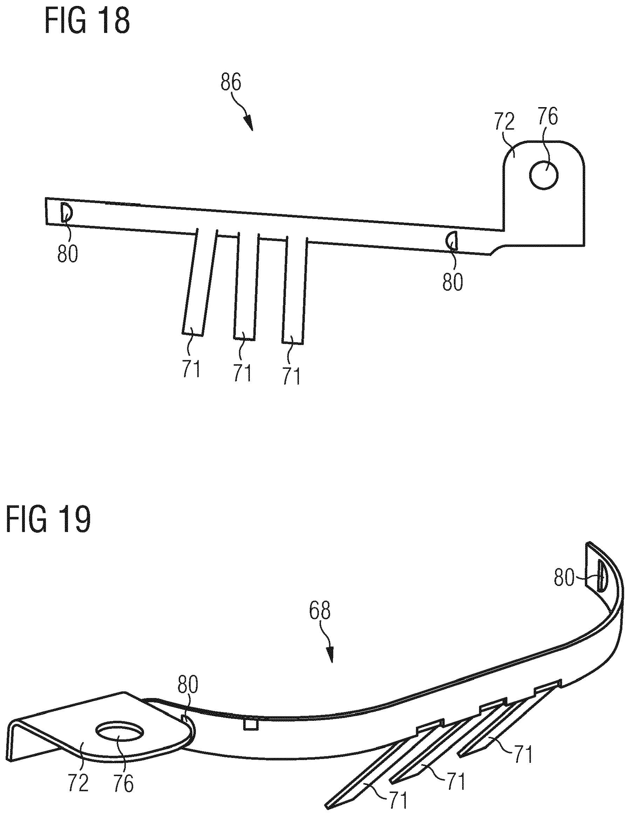

Nachfolgend wird anhand von Fig. 18 und Fig. 19 die Herstellung eines Interkonnektorenblechs 68 näher erläutert. Aus einem zunächst Bereitgestellten flachen Blechmaterial wird ein Interkonnektorenblechrohling 86 ausgeschnitten.

Der Interkonnektorenblechrohling 86 weist bereits eine Mehrzahl von rechteckigen Kontaktzungen 71, einen Anschlussbereich 72, einen bandartigen Bereich 78 sowie Halteösen 80 auf.

Der Interkonnektorenblechrohling 86 wird durch Biegen in das fertige Interkonnektorenblech 68 umgeformt. Dabei wird der bandartige Bereich 78 so gebogen, dass das Interkonnektorenblech 68 sich an den Brennstoffzellenbereich 70 anschmiegen kann. Die Halteösen 80 werden zu den Befestigungsnoppen 82 korrespondierenden Positionen gebogen. Die Kontaktzungen 71 erhalten den Winkel a, welcher der Neigung der Gaskanäle 38, 40 zur Horizontalrichtung entspricht. Schließlich kann noch der Anschlussbereich 72 in die Horizontale gebogen werden.

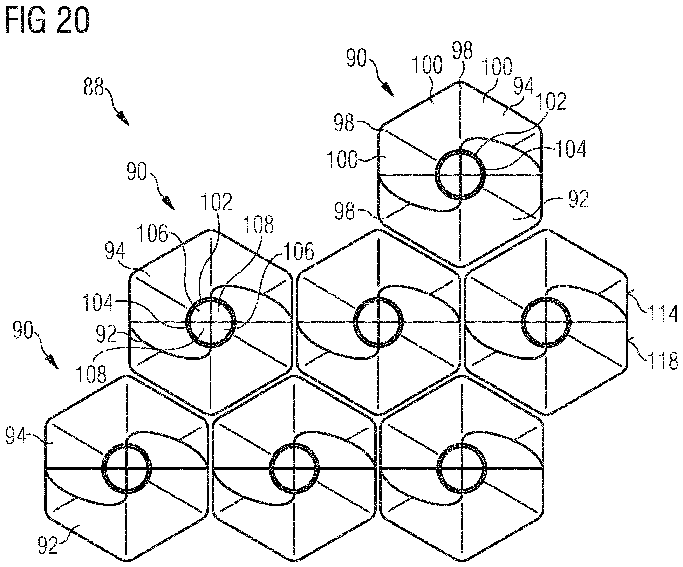

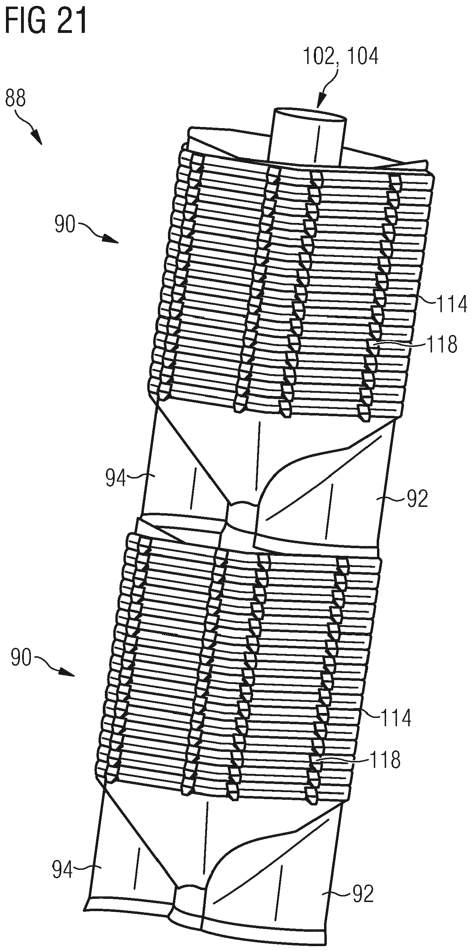

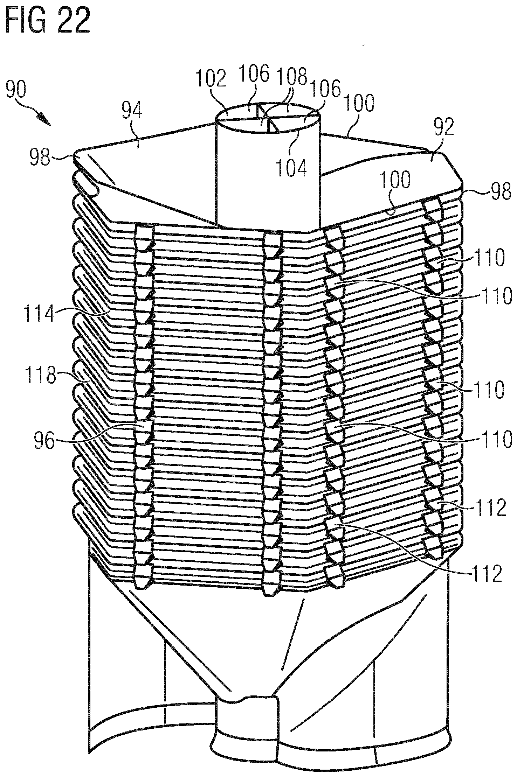

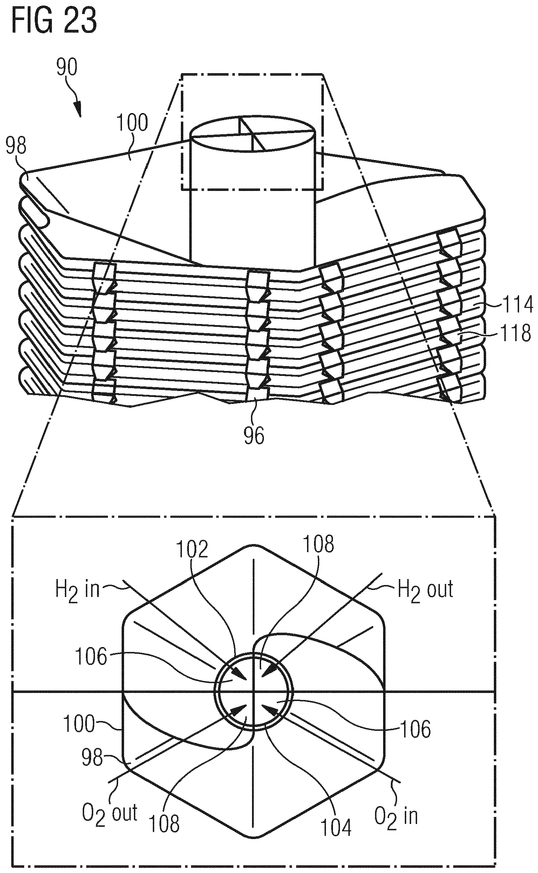

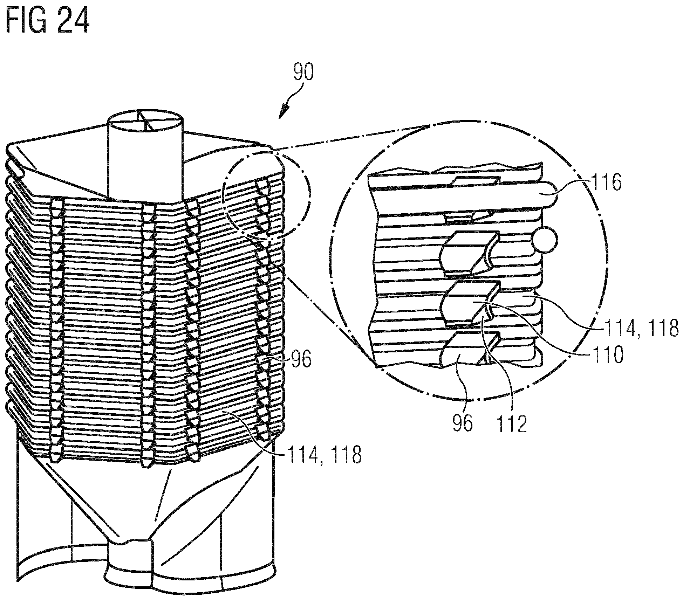

Es wird nachfolgend auf Fig. 20 und Fig. 21 Bezug genommen, die jeweils ein Beispiel eines Brennstoffzellensystems 88 zeigen. Das Brennstoffzellensystem 88 umfasst eine Mehrzahl von Brennstoffzellen 90, die in Fig. 22 bis Fig. 24 näher dargestellt ist.

Die Brennstoffzellen 90 haben in Draufsicht eine grob hexagonale Form. Die Brennstoffzellen 90 sind, wie beispielsweise in Fig. 20 näher dargestellt, mit einem Abstand zueinander in einer Ebene angeordnet. Die Brennstoffzellen 90 können auch, wie in Fig. 21 näher dargestellt, entlang ihrer Konstruktionsachse 22 gestapelt angeordnet sein. Denkbar ist auch eine Kombination der Anordnungen, bei der die Brennstoffzellen 90 in mehreren Ebenen übereinander angeordnet sind.

Nachfolgend wird ein Beispiel für die Brennstoffzelle 90 anhand Fig. 22 bis Fig. 24 näher erläutert.

Die Brennstoffzelle 90 weist einen ersten Brennstoffzellenbereich 92 und einen zweiten Brennstoffzellenbereich 94 auf. Jeder Brennstoffzellenbereich 92, 94 enthält einen Gaskanal. Vorliegend sind der erste Brennstoffzellenbereich 92 und der zweite Brennstoffzellenbereich 94 integral als einzelnes einstückiges Element ausgebildet.

Der erste Brennstoffzellenbereich 92 umfasst einen ersten Gaskanal, beispielsweise für Oxidator und der zweite Brennstoffzellenbereich 94 umfasst einen zweiten Gaskanal, beispielsweise für Brennstoff.

Der erste Gaskanal und der zweite Gaskanal erstrecken sich in Form einer Doppelspirale in einer Umfangsrichtung um die Konstruktionsachse 22. Die Konstruktionsachse 22 verläuft im Zentrum der Brennstoffzelle 90.

Der erste Gaskanal und der zweite Gaskanal sind vorzugsweise durch eine ionenleitfähige Trennschicht entlang ihrer Erstrecktungsrichtung miteinander verbunden. Ferner kann eine Isolationsschicht angeordnet sein, um einen Zellenschluss zu verhindern.

Jeder Gaskanal kann eine Elektrodenbeschichtung 96 enthalten, um der Brennstoffzelle 90 die darin erzeugte elektrische Energie zu entnehmen.

Jeder der Gaskanäle weist eine Mehrzahl von Gaskanalkrümmungsbereichen 98 und daran anschließende Gaskanalebenenbereiche 100 auf. Jeder Gaskanalkrümmungsbereich 98 ist vorzugsweise um 120° gekrümmt. Jeder Gaskanalebenenbereich 100 ist gerade und ohne Krümmung ausgebildet.

Insgesamt ergibt sich in Draufsicht eine im Wesentlichen hexagonale Form der Brennstoffzellenbereiche 92, 94.

Die Brennstoffzelle 90 umfasst ein erstes Verteilrohr 102 und ein zweites Verteilrohr 104. Das erste Verteilrohr 102 kann für den Brennstoff vorgesehen sein, während das zweite Verteilrohr 104 für den Oxidator vorgesehen sein kann.

Die Verteilrohre 102, 104 sind in einem Bereich angeordnet, der von den Gaskanälen umgeben beziehungsweise in Draufsicht betrachtet umschlossen ist. Die Verteilrohre 102, 104 sind bevorzugt in Draufsicht betrachtet im Zentrum der Brennstoffzelle 90 angeordnet. Die Verteilrohre 102, 104 verlaufen vorliegend parallel zu der Konstruktionsachse 22.

Jedes Verteilrohr 102, 104 weist einen Gasversorgungsbereich 106 auf, der an ein Gasreservoir anschließbar ausgebildet sein kann. Im Fall des Oxidators kann der Gasversorgungsbereich 106 der Luftzufuhr ohne Gasreservoir dienen.

Jedes Verteilrohr 102, 104 hat zudem einen Gasentsorgungsbereich 108 aus dem nicht verbrauchtes Restgas und Reaktionsprodukt austreten kann.

Beispielsweise kann erste Verteilrohr 102 zur Verteilung des Brennstoffs vorgesehen sein und mit dem ersten Gaskanal einen durchgehenden Fluidpfad bilden. Mit anderen Worten ist der Gasversorgungsbereich 106 des ersten Verteilrohrs 102 über den ersten Gaskanal mit dem Gasentsorgungsbereich 108 des ersten Verteilrohrs 102 fluidverbunden.

Das zweite Verteilrohr 58 kann der Verteilung des Oxidators dienen und mit dem zweiten Gaskanal einen durchgehenden Fluidpfad bilden. Mit anderen Worten ist der Gasversorgungsbereich 106 des zweiten Verteilrohrs 104 über den zweiten Gaskanal mit dem Gasentsorgungsbereich 108 des zweiten Verteilrohrs 104 fluidverbunden.

Die Brennstoffzelle 90 kann intern in mehrere Teilabschnitte aufgeteilt sein, die un unabhängig von den übrigen Teilabschnitten durch die Verteilrohre 102, 104 mit Brennstoff und Oxidator versorgt werden können.

Die Brennstoffzelle 90 umfasst zusätzlich eine Mehrzahl von Durchbrüchen 110 für Interkonnektorenbleche. Die Durchbrüche 110 sind vorzugsweise an den Gaskanalebenenbereichen 100 angeordnet. Die Durchbrüche 110 können an den jeweiligen Enden des Gaskanalebenenbereichs 100 benachbart zu den Gaskanalkrümmungsbereichen 98 angeordnet sein.

Die Brennstoffzelle 90 umfasst eine Halteeinrichtung 112 für Interkonnektorenbleche. Die Halteeinrichtung 112 ist in der Nähe bzw. in den Durchbrüchen 110 angeordnet.

Die Brennstoffzelle 90 umfasst zudem eine Wickelstruktur 114 für ein leitfähiges Element 116, beispielsweise einen Draht. Die Wickelstruktur 114 ist auf der Außenumfangsfläche der Brennstoffzelle 90. Die Wickelstruktur 114 ist spiralförmig ausgebildet. Die Wickelstruktur 114 umfasst vorzugsweise eine Rille 118, die so verläuft, dass Interkonnektorenbleche gleicher Polarität durch Wickeln des leitfähigen Elements 116 um die Wickelstruktur 114 miteinander elektrisch verbindbar sind.

Ferner kann das leitfähige Element 116 eine Isolation aufweisen, die verhindert, dass das leitfähige Element 116 einen Kurzschluss verursacht. Das leitfähige Element 116 kann auch mehrere Drähte enthalten, die jeweils einer Interkonnektorenpolarität zugeordnet sind und lediglich mit dieser in Kontakt kommen.

Die Brennstoffzelle 90 umfasst ferner eine Mehrzahl von Interkonnektorenblechen 120.

Jedes Interkonnektorenblech 120 umfasst eine einzige Kontaktzunge 122. Die Kontaktzunge 120 ragt in den ersten Gaskanal oder in den zweiten Gaskanal hinein. Die Kontaktzungen 120 sind jeweils an der Wand des jeweiligen Gaskanals befestigt. Die Elektrodenbeschichtung 96 ist vorzugsweise so angeordnet, dass die Kontaktzungen 120 in der Elektrodenbeschichtung 96 eingebettet sind.

Jedes Interkonnektorenblech 120 umfasst ferner einen elektrischen Anschlussbereich 124, der an die Kontaktzunge 120 anschließt. Der Anschlussbereich 124 ist so ausgebildet, dass er im eingebauten Zustand des Interkonnektorenblechs 120 radial nach außen gewandt ist und von einem leitfähigen Element 116 erfasst werden kann.

Jedes Interkonnektorenblech 120 weist einen Klemmbereich 126 auf. Der Klemmbereich 126 erstreckt sich im Wesentlichen parallel zu und in einem Abstand von der Kontaktzunge 120. Das Interkonnektorenblech 120 kann somit in den Durchbruch 110 eingesteckt und an der Brennstoffzelle 90 gehaltert werden.

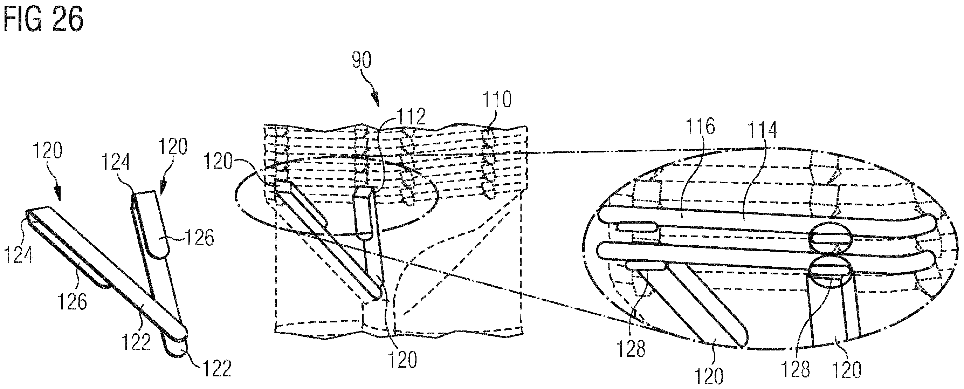

Nachfolgend wird auf Fig. 26 Bezug genommen. Die Brennstoffzelle 90 kann, wie dargestellt, elektrisch angeschlossen werden, indem zunächst die Interkonnektorenbleche 120 in die Durchbrüche 110 eingesteckt werden. Sodann kann das leitfähige Element 116 unter Verwendung der Wickelstruktur 114 um die Außenumfangsfläche der Brennstoffzelle 90 gewickelt werden. Dabei kommt das leitfähige Element 116 mit den Interkonnektorenblechen 120, genauer gesagt dem elektrischen Anschlussbereich 124 in Kontakt. Etwaige verbleibende Öffnungen können mittels Glaslot 128 abgedichtet werden. Das Glaslot kann gleichzeitig der Befestigung der Interkonnektorenbleche 120 dienen.

Zur Bereitstellung einer höheren Leistungdichte wird eine Brennstoffzelle (66) vorgeschlagen. Die Brennstoffzelle (66) kann durch 3D-Druck in Keramik hergestellt werden und weist aufgrund ihrer Spiralform eine verbesserte Leistungsdichte auf. Zur besseren Entnahme der mit der Brennstoffzelle (66) erzeugten Energie, wird ein Interkonnektorenblech (68) vorgeschlagen, das mittels Halteösen (80) an Befestigungsnoppen (82) der Brennstoffzelle (66) formschlüssig befestigt werden kann. Zusätzlich kann das Interkonnektorenblech (68) mittels Glaslot festgelegt werden.

### Bezugszeichenliste:

- 10: Brennstoffzelle
- 12: erster Brennstoffzellenbereich
- 14: zweiter Brennstoffzellenbereich
- 16: Gaskanal
- 18: erster Gaskanal
- 20: zweiter Gaskanal
- 22: Konstruktionsachse
- 24: ionenleitfähige Trennschicht
- 26: Isolationsschicht
- 28: Elektrodenbeschichtung
- 30: Brennstoffzelle
- 32: Brennstoffzellenbereich
- 34: erster Brennstoffzellenbereich
- 36: zweiter Brennstoffzellenbereich
- 38: erster Gaskanal
- 40: zweiter Gaskanal
- 42: Konstruktionsachse
- 44: Gaskanalkrümmungsbereich
- 46: Gaskanalebenenbereich
- 48: Gaseinlassbereich
- 50: Gasauslassbereich
- 52: Elektrodenbeschichtung
- 54: Brennstoffzelle
- 56: erstes Verteilrohr
- 58: zweites Verteilrohr
- 60: Gasversorgungsbereich
- 62: Gasentsorgungsbereich
- 64: Teilabschnitt
- 66: Brennstoffzelle
- 68: Interkonnektorenblech
- 70: Brennstoffzellenbereich
- 71: Kontaktzunge
- 72: Anschlussbereich
- 74: Verbindungsachse
- 76: Anschlussöffnung
- 78: bandartiger Bereich
- 80: Halteöse
- 81: Halteeinrichtung
- 82: Befestigungsnoppen
- 84: Durchbruch
- 86: Interkonnektorenblechrohling
- 88: Brennstoffzellensystem
- 90: Brennstoffzelle
- 92: erster Brennstoffzellenbereich
- 94: zweiter Brennstoffzellenbereich
- 96: Elektrodenbeschichtung
- 98: Gaskanalkrümmungsbereich
- 100: Gaskanalebenenbereich
- 102: erstes Verteilrohr
- 104: zweites Verteilrohr
- 106: Gasversorgungsbereich
- 108: Gasentsorgungsbereich
- 110: Durchbruch
- 112: Halteeinrichtung
- 114: Wickelstruktur
- 116: leitfähiges Element
- 118: Rille
- 120: Interkonnektorenblech
- 122: Kontaktzunge
- 124: elektrischer Anschlussbereich
- 126: Klemmbereich
- 128: Glaslot

## Patentansprüche

1. Interkonnektorenblech (68) für eine Brennstoffzelle (10, 30, 54, 66), wobei das Interkonnektorenblech (68) in einen Gaskanal (18, 20, 38, 40) einführbar ist, einen Anschlussbereich (72), der zum Entnehmen der elektrischen Energie ausgebildet ist, und wenigstens eine Halteöse (80) aufweist, mittels der das Interkonnektorenblech (68) an der Brennstoffzelle (10, 30, 54, 66) durch Einhängen an einer Halteeinrichtung (81) formschlüssig halterbar ist.

2. Interkonnektorenblech (68) nach Anspruch 1, wobei das Interkonnektorenblech (68) als Blechbiegeteil ausgebildet ist.

3. Interkonnektorenblech (68) nach einem der vorhergehenden Ansprüche, wobei mehrere Kontaktzungen (71) kammartig angeordnet sind.

4. Interkonnektorenblech (68) nach einem der vorhergehenden Ansprüche, wobei das Interkonnektorenblech (68) einen ähnlichen Ausdehnungskoeffizienten wie der Gaskanal (18, 20, 38, 40) aufweist, in den es einführbar ist, um eine Delamination des Interkonnektorenblechs (68), insbesondere der Kontaktzunge (71), zu verhindern.

5. Interkonnektorenblech (68) nach einem der vorhergehenden Ansprüche, wobei der Anschlussbereich (72) derart ausgebildet ist, dass entlang einer Konstruktionsachse (22, 42) angeordnete Interkonnektorenbleche (68) mittels einer Stange, vorzugsweise einer Gewindestange, verbindbar sind.

6. Interkonnektorenblech (68) nach einem der vorhergehenden Ansprüche, wobei die Halteöse (80) eine Kreisform oder D-Form aufweist.

7. Interkonnektorenblech (68) nach einem der vorhergehenden Ansprüche, wobei das Interkonnektorenblech (68) einen bandartigen Bereich (78) umfasst, der sich im befestigten Zustand an ein Brennstoffzellensegment (12, 14, 32, 34, 36) anschmiegt.

8. Brennstoffzellensegment (12, 14, 32, 34, 36) zum Bilden einer Brennstoffzelle (10, 30, 54, 66), wobei das Brennstoffzellensegment (12, 14, 32, 34, 36) zum Haltern eines Interkonnektorenblechs (68) mittels wenigstens eines Befestigungsnoppens ausgebildet ist, durch den Interkonnektorenblechs (68) formschlüssig erfassbar ist.

9. Brennstoffzellensegment (12, 14, 32, 34, 36) nach Anspruch 8, wobei der Befestigungsnoppen halbkugelförmig, viertelkugelförmig oder hakenartig ausgebildet ist.

10. Brennstoffzellensegment (12, 14, 32, 34, 36) nach einem der Ansprüche 8 oder 9, wobei das Brennstoffzellensegment (12, 14, 32, 34, 36) eine Anlagefläche für einen bandartigen Bereich eines Interkonnektorenblechs (68) aufweist, sodass der bandartige Bereich (78) sich im befestigten Zustand des Interkonnektorenblechs (68) anschmiegt.

11. Brennstoffzelle (10, 30, 54, 66), vorzugsweise Festoxidbrennstoffzelle, für ein Brennstoffzellensystem, vorzugsweise eines Luftfahrzeugs, wobei die Brennstoffzelle (10, 30, 54, 66) ein Brennstoffzellensegment (12, 14, 32, 34, 36) nach einem der Ansprüche 8 bis 10 und ein Interkonnektorenblech (68) nach einem der Ansprüche 1 bis 7 aufweist, wobei das Interkonnektorenblech (68) mittels der Halteöse (80) an dem Befestigungsnoppen (82) gehaltert ist.

12. Luftfahrzeug umfassend eine Brennstoffzelle (10, 30, 54, 66) nach Anspruch 11.

13. Verfahren zum Herstellen eines Interkonnektorenblechs (68) für ein Brennstoffzellensegment (12, 14, 32, 34, 36), mit den Schritten:
a) Bereitstellen eines flachen Metallblechs;
b) Ausschneiden eines flachen Interkonnektorenblechrohlings unter Ausbildung wenigstens einer Interkonnektorenblech (68), wenigstens eines Anschlussbereichs und wenigstens einer Halteöse (80); und
c) Biegen des Interkonnektorenblechrohlings (86) in eine dreidimensionale Form die der Kontur des Brennstoffzellensegments (12, 14, 32, 34, 36) derart entspricht, dass das Interkonnektorenblech (68) sich im eingebauten Zustand an das Brennstoffzellensegment (12, 14, 32, 34, 36) anschmiegt.

14. Verfahren zum Herstellen einer Brennstoffzelle (10, 30, 54, 66) durch Ausführen des Verfahrens nach Anspruch 13, Einfügen der Interkonnektorenblech (68) des Interkonnektorenblechs (68) in einen Gaskanal (18, 20, 38, 40) der Brennstoffzelle (10, 30, 54, 66) und Befestigen der Interkonnektorenblech (68) an der Gaskanalwand.

15. Verfahren nach Anspruch 14, **gekennzeichnet durch** anschließendes Beschichten der Gaskanalwand mit einer Elektrodenbeschichtung (52), sodass die Interkonnektorenblech (68) in der Elektrodenbeschichtung (52) eingebettet ist.
